(19) Europäisches Patentamt
European Patent Office
Office européen des brevets

(11) **EP 3 538 795 B2**

(12) **NOUVEAU FASCICULE DE BREVET EUROPEEN**
Après la procédure d'opposition

(45) Date de publication et mention de la décision concernant l'opposition:
**13.08.2025 Bulletin 2025/33**

(45) Mention de la délivrance du brevet:
**18.01.2023 Bulletin 2023/03**

(21) Numéro de dépôt: **16816327.7**

(22) Date de dépôt: **10.11.2016**

(51) Classification Internationale des Brevets (IPC):
**F16J 15/324** (2016.01)      **F16C 33/78** (2006.01)
**F16J 15/3264** (2016.01)

(52) Classification Coopérative des Brevets (CPC):
**F16J 15/324; F16C 19/186; F16C 33/581; F16C 33/583; F16C 33/7826; F16C 33/7876; F16C 33/7883; F16J 15/3264;** F16C 2223/02; F16C 2240/54; F16C 2326/02

(86) Numéro de dépôt international:
**PCT/FR2016/052933**

(87) Numéro de publication internationale:
**WO 2018/087433 (17.05.2018 Gazette 2018/20)**

(54) **ENSEMBLE DE JOINT D'ÉTANCHÉITÉ, PALIER À ROULEMENT COMPRENANT UN TEL ENSEMBLE, ET PROCÉDÉ POUR FABRIQUER CET ENSEMBLE**

DICHTUNGSANORDNUNG, WÄLZLAGER MIT SOLCH EINER ANORDNUNG UND VERFAHREN ZUR HERSTELLUNG DIESER ANORDNUNG

SEAL ASSEMBLY, ROLLING BEARING COMPRISING SUCH AN ASSEMBLY, AND METHOD FOR MANUFACTURING THIS ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.09.2019 Bulletin 2019/38**

(73) Titulaire: **Hutchinson**
**75008 Paris (FR)**

(72) Inventeurs:
• **LOR, Jean**
**49520 Le Bourg d'Ire (FR)**
• **POSTEC, Valérie**
**53200 Ménil (FR)**
• **CHAGNEAU, Stéphane**
**49500 Nyoiseau (FR)**

(74) Mandataire: **Plasseraud IP**
**104 Rue de Richelieu**
**CS92104**
**75080 Paris Cedex 02 (FR)**

(56) Documents cités:
| | |
|---|---|
| EP-A- 0 731 181 | EP-A1- 1 830 086 |
| EP-B1- 3 051 157 | WO-A1-2012/161259 |
| DE-A1- 102009 039 279 | DE-T5- 112016 001 146 |
| JP-A- 2003 184 897 | JP-A- 2004 353 710 |
| JP-A- 2016 023 669 | US-A1- 2003 207 657 |
| US-A1- 2007 297 901 | US-A1- 2011 017 006 |
| US-A1- 2016 146 348 | |

EP 3 538 795 B2

## Description

## DOMAINE TECHNIQUE

La présente invention est relative aux ensembles de joint d'étanchéité.

## ETAT DE LA TECHNIQUE ANTERIEURE

Plus particulièrement, l'invention concerne un ensemble de joint d'étanchéité comprenant :

- un élément fixe,
- un élément rotatif destiné à être mobile en rotation par rapport à l'élément fixe autour d'un axe de rotation, et
- un organe d'étanchéité comprenant une armature annulaire rigide montée solidaire sur un élément parmi l'élément fixe et l'élément rotatif, et un joint d'étanchéité solidaire de l'armature, ledit joint d'étanchéité étant réalisé en un matériau élastique et étant en contact avec une surface de coulissement de l'autre élément parmi l'élément fixe et l'élément rotatif, et
- une bague annulaire comprenant une portion de cylindre montée solidaire de l'autre élément parmi l'élément fixe et l'élément rotatif, et une portion de collerette qui s'étend radialement par rapport à l'axe de rotation depuis une extrémité de ladite portion de cylindre, ladite surface de coulissement étant formée sur la portion de cylindre et la portion de collerette de la bague annulaire, et dans lequel:

  - le joint d'étanchéité comprend une première lèvre qui s'étend radialement depuis l'armature annulaire jusqu'à la portion de cylindre pour être en contact avec la surface de coulissement appartenant à ladite portion de cylindre, et une seconde lèvre qui s'étend axialement depuis l'armature annulaire jusqu'à la portion de collerette pour être en contact avec une surface de coulissement appartenant à ladite portion de collerette,
  - ladite bague annulaire et lesdites première et deuxième lèvres d'étanchéité définissant un volume interne.

On connaît de nombreux exemples d'ensembles de ce type.

Un tel ensemble d'étanchéité est par exemple utilisé dans un roulement, et par exemple dans un roulement de roue automobile. Cet ensemble de joint d'étanchéité permet notamment de contenir un fluide de lubrification à l'intérieur du roulement pour assurer son fonctionnement avec un faible frottement.

Malheureusement, cet ensemble d'étanchéité contribue à augmenter le frottement, c'est-à-dire le couple de frottement en rotation. Ce phénomène fait partie des pertes d'énergie mécanique lors de la rotation. Pour de réduire ces pertes, on cherche des solutions à faible frottement mais qui permettent de conserver l'étanchéité.

Le document EP 1 830 086 décrit un exemple d'un tel ensemble de joint d'étanchéité dans lequel la surface de coulissement a une rugosité arithmétique moyenne (Ra) supérieure ou égale à 0,5 $\mu$m pour créer des creux, et on utilise une graisse ayant une viscosité cinématique comprise entre 10 et 60 mm$^2$/sec à 40°C.

Le document US 2007/297901 montre un dispositif d'étanchéité avec un joint d'étanchéité et une bague pour empêcher des corps étranger à entrer dans un roulement. Le joint d'étanchéité comprend une seconde lèvre en contact avec une surface externe cylindrique de la bague, cette surface externe cylindrique ayant rugosité arithmétique entre 0,2 $\mu$m et 2,0 $\mu$m.

Le document US 2003/207657 montre un outil de finition d'une surface d'un diamètre externe d'une pièce cylindrique. Cet outil comprend un élément cylindrique fendu avec une surface interne de rectification comprenant des particules abrasives.

WO2012161259 montre un ensemble de joint d'étanchéité comprenant un élément fixe, un élément rotatif, et un organe d'étanchéité comprenant une armature annulaire rigide montée solidaire sur un élément fixe et un joint d'étanchéité solidaire de l'armature, et une bague annulaire comprenant une portion de cylindre et une portion de collerette, et dans lequel le joint d'étanchéité comprend une première lèvre en contact avec la surface de coulissement appartenant à la portion de cylindre, et une seconde lèvre en contact avec une surface de coulissement appartenant à la portion de collerette, la bague annulaire et les lèvres d'étanchéité définissant un volume interne.

## EXPOSE DE L'INVENTION

La présente invention a pour but d'améliorer les ensembles de joint d'étanchéité de ce type, notamment pour réduire le couple de frottement tout en conservant une excellente étanchéité.

A cet effet, l'ensemble de joint d'étanchéité est **caractérisé** en ce que

- la surface de coulissement a une rugosité arithmétique moyenne (Ra) supérieure ou égale à 0,15 $\mu$m et inférieure à 0,5 $\mu$m, et
- la surface de coulissement a un ratio de rugosité (R) supérieur ou égal à 1,5, ledit ratio de rugosité (R) étant le rapport d'un premier paramètre correspondant à une quantité de creux d'un profil sur la surface de coulissement sur un deuxième paramètre correspondant à une quantité de pics dudit profil sur la surface de coulissement.

Grâce à ces dispositions, on assure que la surface de coulissement est suffisamment lisse et lubrifiée pour éviter l'abrasion du joint d'étanchéité. On obtient ainsi un couple de frottement très réduit entre l'élément fixe et l'élément rotatif. Ce couple de frottement a une valeur plus constante (répétable) pour une pluralité pièces.

Ces dispositions ont également pour effet de réduire l'usure des surfaces en contact et notamment du joint d'étanchéité, et d'augmenter la durée de vie de l'ensemble de joint d'étanchéité.

Ces dispositions ont également pour effet de conserver la performance en étanchéité, et d'améliorer la répétabilité de cette performance d'étanchéité sur une pluralité de pièces.

Dans divers modes de réalisation de l'ensemble de joint d'étanchéité, on peut éventuellement avoir recours en outre à l'une et/ou à l'autre des dispositions suivantes.

Selon l'invention, le premier paramètre est le paramètre Rvk et le deuxième paramètre est le paramètre Rpk, lesdits paramètres Rvk et Rpk étant définis et déterminés selon la norme ISO 13565.

Selon un aspect, le ratio de rugosité est de préférence supérieur ou égal à 2.

Selon un aspect, la rugosité arithmétique moyenne est supérieure ou égale à 0,2 $\mu$m et inférieure à 0,3 $\mu$m

Selon un aspect, le volume interne est au moins partiellement rempli d'une graisse.

Selon un aspect, la graisse a une viscosité cinématique à 40°C comprise entre 5 centistokes et 40 centistokes.

L'invention se rapporte également à **un palier à roulement** comprenant un ensemble de joint d'étanchéité selon les caractéristiques précédentes et des corps de roulement disposés dans un espace de roulement pour permettre la rotation relative de l'élément rotatif par rapport à l'élément fixe autour de l'axe de rotation.

L'invention se rapporte également à **un procédé de fabrication d'un ensemble de joint d'étanchéité** comprenant les étapes suivantes :

a) on fournit un ensemble de joint d'étanchéité comprenant :

- un élément fixe,
- un élément rotatif destiné à être mobile en rotation par rapport à l'élément fixe autour d'un axe de rotation,
- un organe d'étanchéité comprenant une armature annulaire rigide montée solidaire sur un élément parmi l'élément fixe et l'élément rotatif, et un joint d'étanchéité solidaire de l'armature, ledit joint d'étanchéité étant réalisé en un matériau élastique et étant en contact avec une surface de coulissement de l'autre élément parmi l'élément fixe et l'élément rotatif, et
- une bague annulaire (17) comprenant une portion de cylindre (17a) montée solidaire de l'autre élément parmi l'élément fixe et l'élément rotatif, et une portion de collerette (17b) qui s'étend radialement par rapport à l'axe de rotation(X) depuis une extrémité de ladite portion de cylindre, ladite surface de coulissement (16) étant formée sur la portion de cylindre et la portion de collerette de la bague annulaire (17), et

dans lequel :

- le joint d'étanchéité (15) comprend une première lèvre (15b) qui s'étend radialement depuis l'armature annulaire (14) jusqu'à la portion de cylindre (17a) pour être en contact avec la surface de coulissement appartenant à ladite portion de cylindre, et une seconde lèvre (15c) qui s'étend axialement depuis l'armature annulaire (14) jusqu'à la portion de collerette (17b) pour être en contact avec une surface de coulissement appartenant à ladite portion de collerette,
- ladite bague annulaire (17) et lesdites première et deuxième lèvres (15a, 15b) d'étanchéité définissant un volume interne,

b) on effectue un traitement de la surface de coulissement par au moins les sous-étapes suivantes :

- une sous-étape de grenaillage pour former des creux sur la surface de coulissement, puis
- une sous-étape de polissage pour éliminer au moins partiellement des pics sur la surface de coulissement.

Dans divers modes de réalisation du procédé, on peut éventuellement avoir recours en outre à l'une et/ou à l'autre des dispositions suivantes.

Selon un aspect, la sous étape de grenaillage consiste à impacter la surface de coulissement avec des billes de verre d'un diamètre compris entre 50 $\mu$m et 423 $\mu$m pendant une durée comprise entre 5 minutes et 15 minutes.

Selon un aspect, la sous-étape de polissage consiste à faire vibrer la surface de coulissement en présence de formes de finition.

Selon un aspect, la sous-étape de polissage est effectuée pendant une durée comprise entre 15 minutes et 45 minutes.

Selon un aspect, l'ensemble de joint d'étanchéité comprend en outre une bague annulaire et destinée à être solidaire de l'autre élément, et ladite surface de coulissement est formée sur ladite bague annulaire.

## BREVE DESCRIPTION DES DESSINS

D'autres caractéristiques et avantages de l'invention apparaîtront au cours de la description suivante d'un de ses modes de réalisation, donné à titre d'exemple non limitatif, en regard des dessins joints.

Sur les dessins :

- la figure 1 est une coupe transversale d'un ensemble de joint d'étanchéité selon un mode de réalisation donné à titre d'illustration;
- la figure 2 est une coupe transversale d'un ensemble de joint d'étanchéité selon un mode de réalisation de l'invention ;
- la figure 3 est une courbe d'un profil d'une ligne sur une surface de coulissement ;
- la figure 4 est une courbe de taux de longueur portante du profil de la figure 3 ; et
- la figure 5 est un palier à roulement comprenant un ensemble de joint d'étanchéité selon l'invention.

Sur les différentes figures, les mêmes références numériques désignent des éléments identiques ou similaires.

## DESCRIPTION DETAILLEE DE MODES DE REALISATION

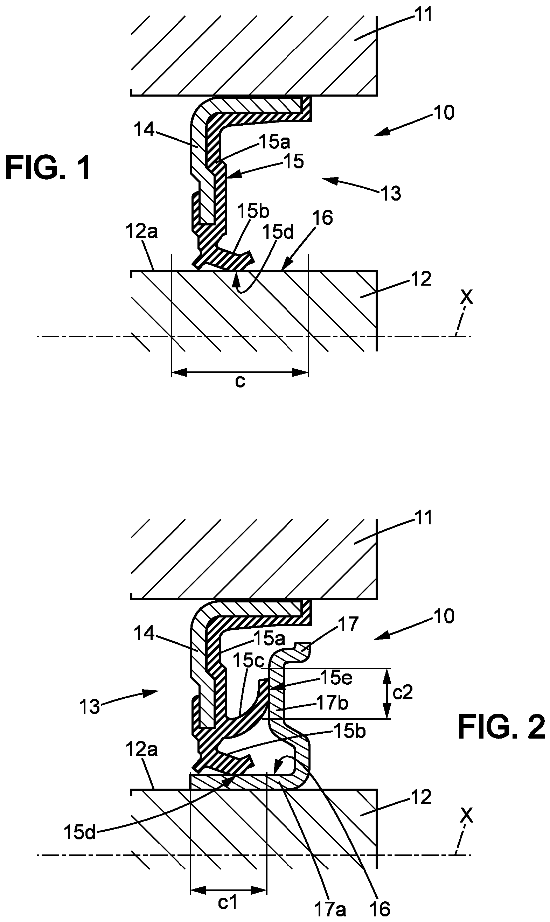

La **figure 1** montre à titre d'illustration un **ensemble de joint d'étanchéité 10** qui comprend :

- un élément fixe 11,
- un élément rotatif 12 mobile en rotation par rapport à l'élément fixe autour d'un axe de rotation X, et
- un organe d'étanchéité 13 comprenant une armature 14 annulaire rigide et un joint d'étanchéité 15 solidaire de l'armature, ledit joint d'étanchéité 15 étant réalisé en un matériau élastique et étant en contact de coulissement avec une surface de coulissement 16.

L'armature 14 est montée solidaire sur un élément parmi l'élément fixe 11 et l'élément rotatif 12.

La surface de coulissement 16 est reliée à l'autre élément parmi l'élément fixe 11 et l'élément rotatif 12.

Notamment, l'élément fixe 11 peut être un élément externe, i.e. le plus éloigné de l'axe de rotation X, i.e. situé autour de l'élément rotatif 12 qui est alors un élément interne. C'est le cas d'utilisation d'un élément rotatif 12 qui est un arbre tournant (figure 1).

Inversement, l'élément fixe 11 peut être un élément interne, i.e. le plus rapproché de l'axe de rotation X, i.e. situé à l'intérieur de l'élément rotatif qui est alors un élément externe.

Par souci de simplification de la présente description, il sera maintenant considéré que l'armature 14 est reliée à l'élément fixe 11 externe, et que la surface de coulissement 16 est reliée à l'autre élément, i.e. l'élément rotatif 12 interne, mais bien sûr l'autre utilisation convient également à la présente invention.

Le joint d'étanchéité 15 comprend :

- une portion de fixation 15a qui est fixée à au moins une surface de l'armature 14, par exemple par surmoulage sur ladite armature 14, et avantageusement avec un adhésif préalablement enduit sur ladite surface de l'armature, et
- une première lèvre 15b qui s'étend radialement depuis l'armature 14 annulaire jusqu'à la surface de coulissement 16 pour être en contact avec cette surface de coulissement 16 en une extrémité de lèvre 15d.

Dans le mode de réalisation de la figure 1, la surface de coulissement 16 fait partie intégrante de l'élément rotatif 12, notamment de la surface cylindrique 12a externe de l'élément rotatif 12. Cette surface de coulissement 16 correspond à une portion annulaire de la surface cylindrique 12a et qui s'étend selon une longueur c dans la direction longitudinale de l'axe de rotation X. La portion surface de coulissement 16 est positionnée en correspondance avec l'organe d'étanchéité 13 (en position longitudinale) pour que l'extrémité de lèvre 15d du joint d'étanchéité 15 soit en contact avec ladite surface de coulissement 16.

En variante, la surface de coulissement 16 est formée sur une bague (non représentée) de type annulaire et solidaire de l'autre élément (l'élément rotatif 12). Cette bague est par exemple une pièce métallique. Elle est située entre l'élément rotatif 12 et le joint d'étanchéité 15. L'extrémité de lèvre 15d du joint d'étanchéité 15 est en contact de type coulissement avec une surface externe de cette bague qui tourne avec l'élément rotatif 12.

Selon l'invention, la surface de coulissement 16 présente les caractéristiques suivantes :

- la surface de coulissement 16 a une rugosité arithmétique moyenne Ra supérieure ou égale à 0,15 $\mu$m et inférieure à 0,5 $\mu$m, et
- la surface de coulissement 16 a un ratio de rugosité R supérieur ou égal à 1,5, ledit ratio de rugosité R étant le rapport d'un premier paramètre correspondant à une quantité de creux d'un profil sur la surface de coulissement 16 sur un deuxième paramètre correspondant à une quantité de pics dudit profil sur la surface de coulissement 16.

Selon l'invention, le premier paramètre est le paramètre Rvk et le deuxième paramètre est le paramètre Rpk, lesdits paramètres Rvk et Rpk étant définis et déterminés selon la norme ISO 13565 ; c'est-à-dire :

$$R = \frac{Rvk}{Rpk}$$

Des détails sur les normes de rugosité seront explicités plus loin.

Grâce aux diverses dispositions précédentes, on assure que la surface de coulissement est suffisamment lisse et lubrifiée pour éviter l'abrasion du joint d'étanchéité et pour obtenir un couple de frottement réduit. La performance d'étanchéité de l'ensemble de joint d'étanchéité est conservée. L'usure du joint d'étanchéité est réduite et la durée de vie de l'ensemble est améliorée.

La **figure 2** montre un mode de réalisatior selon l'invention d'un ensemble de joint d'étanchéité 10 qui comprend les mêmes éléments que l'ensemble de joint d'étanchéité de la figure 1.

L'ensemble de joint d'étanchéité 10 comprend en outre une bague annulaire 17 solidaire de l'élément rotatif 12, et qui est située entre l'élément rotatif 12 et le joint d'étanchéité 15. L'extrémité de lèvre 15d du joint d'étanchéité 15 est en contact de type coulissement avec au moins une surface de cette bague qui tourne avec l'élément rotatif 12.

Dans le mode de réalisation selon l'invention, plus précisément, la bague annulaire 17 comprend :

- une portion de cylindre 17a montée solidaire de l'élément rotatif 12, par exemple par emmanchement serré sur la surface cylindrique 12a dudit élément rotatif 12, et
- une portion de collerette 17b qui s'étend radialement par rapport à l'axe de rotation X depuis une extrémité de ladite portion de cylindre 17a.

Le joint d'étanchéité 15 comprend, comme dans le premier mode de réalisation de la figure 1 :

- une portion de fixation 15a qui est fixée à au moins une surface de l'armature 14, et
- une première lèvre 15b qui s'étend radialement depuis l'armature 14 annulaire jusqu'à la surface de coulissement 16 pour être en contact avec cette surface de coulissement 16 en une extrémité de lèvre 15d.

Le joint d'étanchéité 15 comprend de plus dans le présent mode de réalisation selon l'invention, une deuxième lèvre 15c qui s'étend axialement depuis l'armature 14 annulaire jusqu'à la portion de collerette 17b pour être en contact en une extrémité de lèvre 15e avec une deuxième partie de la surface de coulissement 16 appartenant à ladite portion de collerette 17b.

La surface de coulissement 16 fait donc ici partie intégrante de la bague annulaire 17, fixée à l'élément rotatif 12. Cette surface de coulissement 16. Elle correspond par exemple à tout ou partie d'une surface externe de la bague annulaire 17 dirigée vers l'armature 14.

La surface de coulissement 16 comprend par exemple :

- une première partie sur la portion de cylindre 17a de la bague annulaire 17, ladite première partie s'étendant selon une longueur c1 dans la direction longitudinale de l'axe de rotation X et en correspondance (en face) de la première lèvre 15a, et
- une deuxième partie sur la portion de collerette 17b de la bague annulaire 17, ladite deuxième partie s'étendant selon une longueur c2 dans une direction sensiblement perpendiculaire à la direction longitudinale de l'axe de rotation X et en correspondance (en face) de la deuxième lèvre 15c.

Ainsi, les extrémités 15d, 15e de la première lèvre et de la deuxième lèvre sont en contact de coulissement avec la surface de coulissement 16.

Selon l'invention, la surface de coulissement 16 présente les caractéristiques suivantes :

- la surface de coulissement 16 a une rugosité arithmétique moyenne Ra supérieure ou égale à 0,15 μm et inférieure à 0,5 μm, et
- la surface de coulissement 16 a un ratio de rugosité R supérieur ou égal à 1,5, ledit ratio de rugosité R étant le rapport d'un premier paramètre correspondant à une quantité de creux d'un profil sur la surface de coulissement 16 sur un deuxième paramètre correspondant à une quantité de pics dudit profil sur la surface de coulissement 16.

Selon l'invention, le premier paramètre est le paramètre Rvk et le deuxième paramètre est le paramètre Rpk, lesdits paramètres Rvk et Rpk étant définis et déterminés selon la norme ISO 13565 ; c'est-à-dire :

$$R = \frac{Rvk}{Rpk}.$$

Des détails sur les normes de rugosité seront explicités plus loin.

La bague annulaire 17 et les première et deuxième lèvres 15b, 15c, d'étanchéité définisse alors un volume annulaire interne à l'ensemble de joint d'étanchéité.

Avantageusement, ce volume interne est au moins partiellement rempli d'une graisse. Ainsi, les creux de la surface de coulissement 16 seront remplis de ladite graisse, et le couple de frottement est réduit.

La graisse a de préférence une viscosité cinématique à 40°C comprise entre 5 centistokes et 40 centistokes.

Grâce aux diverses dispositions précédentes, on assure que la surface de coulissement est suffisamment lisse et lubrifiée pour éviter l'abrasion du joint d'étanchéité et pour obtenir un couple de frottement réduit. La performance d'étanchéité de l'ensemble de joint d'étanchéité est conservée. L'usure du joint d'étanchéité est réduite et la durée de vie de l'ensemble est améliorée.

En variante, la bague annulaire 17 peut être munie d'un élément de codeur (non représenté), par exemple de type magnétique, tel qu'un codeur en élas-

to-ferrite. Ces éléments codeur présentent habituellement une alternance de pôles magnétiques sud et nord. Un élément capteur est alors apte à générer un signal permettant de déterminer la position et/ou la vitesse de rotation de l'élément rotatif 12 par rapport à l'élément fixe 11.

Selon l'un quelconque des précédents modes de réalisation, on peut avoir les caractéristiques suivantes.

Le ratio de rugosité R est supérieur ou égal à 1,5, et de par exemple supérieur ou égal à 2, ce qui signifie que la surface de coulissement 16 comporte un volume ou une quantité de creux bien plus grand que de pics. Ainsi, la surface de coulissement est lisse et bien lubrifié. Le couple de frottement est alors réduit.

La rugosité arithmétique moyenne Ra est dans une plage réduite, c'est-à-dire supérieure ou égale à 0,2 $\mu$m et inférieure à 0,3 $\mu$m. Ceci permet d'obtenir une surface plus lisse qui présente un couple de frottement réduit.

Nous allons maintenant donner des explications sur **les normes de rugosités** utilisées dans la définition des divers modes de réalisation selon l'invention.

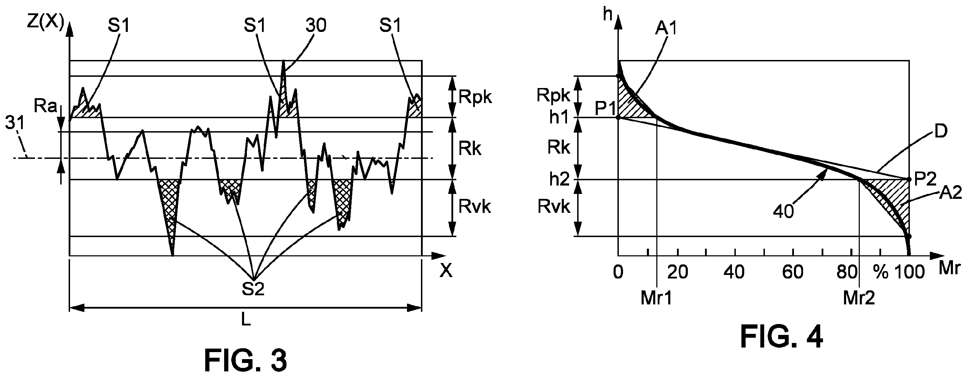

La **figure 3** montre un exemple de profil 30 d'une surface, ce profil étant mesuré avec un appareil approprié, tel qu'un rugosimètre. Le profil 30 est la succession des hauteurs z(x) de la surface mesuré selon une abscisse x d'une ligne sur la surface, qui s'étend sur une longueur L.

La ligne moyenne 31 est une ligne horizontale médiane entre les pics et les creux du profil. Cette ligne est par exemple définie par le processus de filtrage de norme ISO 13565-1.

La rugosité arithmétique moyenne Ra est définie et déterminée, de préférence selon la norme ISO 4287. Cette rugosité arithmétique moyenne Ra est la moyenne arithmétique des valeurs absolue des écarts par rapport à la ligne moyenne 31 du profil 30. Notamment, la rugosité arithmétique moyenne Ra est habituellement calculé par :

$$\mathrm{Ra} \;=\; \int_{0}^{\mathrm{L}} |z(x)|.dx$$

où

z(x) est l'écart du profil 30 par rapport à la ligne moyenne 31,
x est l'abscisse, et
L est la longueur de la ligne sur la surface ou de la ligne moyenne.

Enfin, sur cette figure 3, les pics et les creux du profil 30 ont été hachurés pour montrer leur importance (quantité).

La norme ISO 13565-2 explicite les définitions du paramètre Rvk et du paramètre Rpk. Ces paramètres sont déterminés par la courbe de taux de longueur portante 40 représentée en **figure 4** en regard du profil 30 de la figure 3. Cette courbe est également appelée courbe d'Abbott. Le taux de longueur portante est le rapport en pourcent de la somme des longueurs portantes du profil 30 à une hauteur h (segments horizontaux de matière à une hauteur h) sur la longueur totale L.

On détermine une droite équivalente D par les moindres carrés dans une zone centrale de la courbe de taux de longueur portante 40. Cette zone centrale représente 40% des points du profil. La droite équivalente D coupe l'axe des ordonnées à 0% en un premier point P1 et coupe l'axe des ordonnées à 100% en un deuxième point P2. Cela permet de séparer le profil 30 en 3 zones :

- une zone de pics située à une hauteur h1 supérieure à la hauteur du premier point P1,
- une zone de creux située à une hauteur h2 inférieure à la hauteur du deuxième point P2, et
- une zone de profil écrêté pour les points du profil ayant une hauteur comprise entre la hauteur h1 et la hauteur h2.

On trace alors sur la courbe de taux de longueur portante 40, un premier triangle rectangle A1 ayant une base qui s'étend horizontalement entre le premier point P1 et la courbe de taux de longueur portante 40 et un côté latéral qui s'étend sur l'axe des ordonnées à 0% vers le haut depuis le premier point P1 et d'une hauteur Rpk de telle sorte que la surface dudit premier triangle rectangle A1 soit égale à la surface de la zone des pics S1, représentée en figure 3.

On trace alors sur la courbe de taux de longueur portante 40, un deuxième triangle rectangle A2 ayant une base qui s'étend horizontalement entre le deuxième point P2 et la courbe de taux de longueur portante 40 et un côté latéral qui s'étend sur l'axe des ordonnées à 100% vers le bas depuis le deuxième point P2 et d'une hauteur Rvk de telle sorte que la surface dudit premier triangle rectangle A1 soit égale à la surface de la zone des creux S2, représentée en figure 3.

Le paramètre Rpk est la hauteur du premier triangle rectangle A1. Ce paramètre Rpk quantifie donc une quantité de pics du profil 30.

Le paramètre Rvk est la hauteur du deuxième triangle rectangle A2. Ce paramètre Rvk quantifie donc une quantité de creux du profil 30.

La rugosité arithmétique moyenne Ra et les paramètres Rpk et Rvk sont utilisés pour définir avec précision les caractéristiques de la surface de coulissement 16 de l'ensemble de joint d'étanchéité 10 selon l'invention.

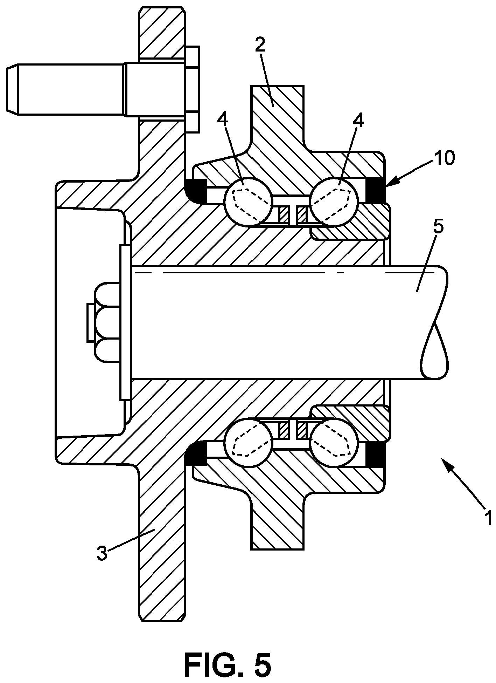

La **figure 5** montre un **palier à roulement 1** comprenant sur au moins un côté un ensemble de joint d'étanchéité 10 tel que décrit ci-dessus afin d'assurer l'étanchéité d'un espace intérieur dudit palier à roulement. Le palier à roulement est par exemple un palier à roulement de véhicule automobile, et plus particulièrement par exemple un palier à roulement de roue de véhicule automobile, comme cela est représenté sur la figure 5.

Ce palier à roulement 1 comprend notamment:

- un organe fixe 2,
- un organe rotatif 3 entrainé en rotation par un arbre 5 et sur lequel est par exemple fixée une roue de véhicule, et
- des corps roulants 4 disposés dans l'espace de roulement 4e formé entre l'organe fixe 2 et l'organe rotatif 3 pour permettre la rotation relative l'organe rotatif 3 par rapport à l'organe fixe 2 autour de l'axe de rotation X, tout en reprenant des efforts importants entre l'organe fixe et l'organe rotatif.

L'élément fixe 11 de l'ensemble de joint d'étanchéité 10 est soit directement l'organe fixe 2, soit fixé sur ledit organe fixe 2 du palier à roulement 1.

L'élément rotatif 12 de l'ensemble de joint d'étanchéité 10 est soit directement l'organe rotatif 3, soit fixé sur ledit organe rotatif 3 du palier à roulement 1.

Les corps roulants 4 peuvent être des billes ou rouleaux ou de tout autre type connus.

Grâce à l'ensemble de joint d'étanchéité 10 selon l'invention, le palier à roulement 1 a un couple de frottement plus faible que l'art antérieur. Un véhicule équipé des tels dispositifs consommera donc moins d'énergie pour avancer.

L'ensemble de joint d'étanchéité 10 peut être fabriqué selon **le procédé de fabrication** suivant :

a) on fournit un ensemble de joint d'étanchéité 10 comprenant :

- un élément fixe 11,
- un élément rotatif 12 destiné à être mobile en rotation par rapport à l'élément fixe autour d'un axe de rotation,
- un organe d'étanchéité 13 comprenant une armature annulaire 14 montée solidaire sur un élément parmi l'élément fixe et l'élément rotatif, et un joint d'étanchéité 15 solidaire de l'armature, ledit joint d'étanchéité 15 étant réalisé en un matériau élastique et étant destiné à être en contact avec une surface de coulissement 16 de l'autre élément parmi l'élément fixe et l'élément rotatif, et
- une bague annulaire (17) comprenant une portion de cylindre (17a) montée solidaire de l'autre élément parmi l'élément fixe et l'élément rotatif, et une portion de collerette (17b) qui s'étend radialement par rapport à l'axe de rotation (X) depuis une extrémité de ladite portion de cylindre, ladite surface de coulissement (16) étant formée sur la portion de cylindre et la portion de collerette de la bague annulaire (17), et

b) on effectue traitement de la surface de coulissement par au moins les sous-étapes suivantes :

- une sous-étape de grenaillage pour former des creux sur la surface de coulissement, puis
- une sous-étape de polissage pour éliminer au moins partiellement des pics sur la surface de coulissement.

La sous étape de grenaillage consiste par exemple à impacter la surface de coulissement 16 (i.e. la pièce ou élément comprenant ladite surface de coulissement) avec des billes en métal ou des billes de verre ou autre.

On emploiera par exemple pour ce grenaillage des billes de verre d'un diamètre compris entre 50 μm et 423 μm pendant une durée comprise entre 5 minutes et 15 minutes.

Le grenaillage forme des pics et des creux sur la surface de coulissement 16. Notamment, la rugosité moyenne arithmétique Ra résultante dépend des caractéristiques de cette sous-étape de grenaillage.

La sous-étape de polissage ou finition consiste à faire vibrer la surface de coulissement 16 (i.e. la pièce ou élément comprenant ladite surface de coulissement) en présence de formes de finition. On utilise à cette fin une machine vibrante, telle qu'un bol vibrant ou Spiratron ®.

Les formes de finition sont par exemple des pièces constituées d'un matériau abrasif, et par exemple en céramique ou en pierre. Ces formes de finitions sont par exemple de forme sphérique ou cylindrique ou alors de forme prismatique, e.g. cubique ou en berlingot. Ces formes de finitions sont adaptées (choisies) pour venir polir toutes les parties des pièces à traiter.

Les formes de finition sont par exemple des cylindres ayant un diamètre compris entre 2 mm et 8 mm, et ayant une longueur comprise entre 5 mm et 15 mm.

Les formes de finition ont éventuellement une dimension dans chacune des directions (X, Y, Z) comprise entre 2 millimètres et 15 millimètres.

En outre, la sous-étape de polissage est effectuée pendant une durée par exemple comprise entre 15 minutes et 45 minutes.

Les formes de finition érodent la partie supérieure de la surface de coulissement 16 pour réduire la quantité de pics du profil de cette surface de coulissement 16. Ainsi, le procédé permet de réduire la quantité des pics relativement à la quantité de creux.

Notamment, cette sous-étape de polissage ou finition permet d'obtenir un ratio de rugosité R tel que défini supérieur à 1,5 ou 2 si cela est désiré.

Par conséquent, grâce au procédé de fabrication décrit ci-dessus, et notamment grâce à l'étape de traitement de la surface de coulissement 16, il est possible d'atteindre les caractéristiques de rugosité souhaitées pour la surface de coulissement 16 de l'ensemble de joint d'étanchéité 10. La surface de coulissement 16 est donc traitée pour avoir une rugosité arithmétique moyenne (Ra) supérieure ou égale à 0,15 μm et inférieure à 0,5 μm, et un ratio de rugosité (R) supérieur ou égal à un, le ratio de rugosité (R) étant le rapport d'un premier paramètre correspondant à une quantité de creux d'un profil sur la surface de coulissement sur un deuxième paramètre correspondant à une quantité de pics dudit profil sur la surface de coulissement.

La surface de coulissement est alors à la fois lisse et avec des cavités destinées à être remplies d'un fluide de lubrification.

L'ensemble de joint d'étanchéité 10 comprend une bague annulaire 17 comme décrit ci-dessus, la surface de coulissement 16 étant formée sur cette bague annulaire 17.

Eventuellement, des parties de la bague annulaire 17 sont masquées pour que les modifications de rugosité effectuées par le procédé de fabrication précédent ne soient effectives que sur les parties complémentaires, c'est-à-dire sur les zones de la surface de coulissement 16.

Il est également possible d'avoir une surface de coulissement 16 constituée de plusieurs sous-surfaces, chaque sous-surface ayant des caractéristiques de rugosité prédéterminées, et éventuellement différentes l'une de l'autre.

Grâce à la surface de coulissement 16 de l'ensemble de joint d'étanchéité 10, qui a une rugosité arithmétique moyenne faible (comprise entre 0,15 μm et 0,5 μm), et qui a un ratio de rugosité R, entre la quantité de creux et la quantité de pics, grand, le couple de frottement ou couple résistant de l'ensemble de joint d'étanchéité est fortement réduit, tout en conservant une excellente étanchéité. En outre, le joint d'étanchéité 15 conserve également une excellente dure de vie pour cette performance d'étanchéité.

**Revendications**

1.  **Ensemble de joint d'étanchéité** (10) comprenant :

    - un élément fixe (11),
    - un élément rotatif (12) destiné à être mobile en rotation par rapport à l'élément fixe autour d'un axe de rotation (X), et
    - un organe d'étanchéité (13) comprenant une armature annulaire (14) rigide montée solidaire sur un élément parmi l'élément fixe et l'élément rotatif, et un joint d'étanchéité (15) solidaire de l'armature (14), ledit joint d'étanchéité (15) étant réalisé en un matériau élastique et étant en contact avec une surface de coulissement (16) de l'autre élément parmi l'élément fixe et l'élément rotatif, et
    - une bague annulaire (17) comprenant une portion de cylindre (17a) montée solidaire de l'autre élément parmi l'élément fixe et l'élément rotatif, et une portion de collerette (17b) qui s'étend radialement par rapport à l'axe de rotation (X) depuis une extrémité de ladite portion de cylindre, ladite surface de coulissement (16) étant formée sur la portion de cylindre et la portion de collerette de la bague annulaire (17), et

dans lequel :

    - le joint d'étanchéité (15) comprend une première lèvre (15b) qui s'étend radialement depuis l'armature annulaire (14) jusqu'à la portion de cylindre (17a) pour être en contact avec la surface de coulissement appartenant à ladite portion de cylindre, et une seconde lèvre (15c) qui s'étend axialement depuis l'armature annulaire (14) jusqu'à la portion de collerette (17b) pour être en contact avec une surface de coulissement appartenant à ladite portion de collerette,
    - ladite bague annulaire (17) et lesdites première et deuxième lèvres (15a, 15b) d'étanchéité définissant un volume interne,

l'ensemble de joint d'étanchéité (10) étant **caractérisé en ce que**

    - la surface de coulissement (16) a une rugosité arithmétique moyenne (Ra) supérieure ou égale à 0,15 μm et inférieure à 0,5 μm, et
    - la surface de coulissement (16) a un ratio de rugosité (R) supérieur ou égal à 1,5, ledit ratio de rugosité (R) étant le rapport d'un premier paramètre correspondant à une quantité de creux d'un profil sur la surface de coulissement sur un deuxième paramètre correspondant à une quantité de pics dudit profil sur la surface de coulissement, et dans lequel le premier paramètre est le paramètre Rvk et le deuxième paramètre est le paramètre Rpk, lesdits paramètres Rvk et Rpk étant définis et déterminés selon la norme ISO 13565.

2.  Ensemble selon la revendication 1, dans lequel le ratio de rugosité (R) est supérieur ou égal à 2.

3.  Ensemble selon la revendication 1, dans lequel la rugosité arithmétique moyenne (Ra) est supérieure ou égale à 0,2 μm et inférieure à 0,3 μm

4.  Ensemble selon la revendication 1, dans lequel le volume interne est au moins partiellement rempli d'une graisse.

5.  Ensemble selon la revendication 4, dans lequel la graisse a une viscosité cinématique à 40°C comprise entre 5 centistokes et 40 centistokes.

**6. Palier à roulement (1)** comprenant un ensemble de joint d'étanchéité (10) selon l'une des revendications 1 à 5, et des corps roulants (4) disposés dans un espace de roulement pour permettre la rotation relative de l'élément rotatif par rapport à l'élément fixe autour de l'axe de rotation.

**7. Procédé de fabrication d'un ensemble de joint d'étanchéité** comprenant les étapes suivantes :

a) on fournit un ensemble de joint d'étanchéité (10) comprenant :

- un élément fixe (11),
- un élément rotatif (12) destiné à être mobile en rotation par rapport à l'élément fixe autour d'un axe de rotation (X),
- un organe d'étanchéité (13) comprenant une armature annulaire rigide (14) montée solidaire sur un élément parmi l'élément fixe et l'élément rotatif, et un joint d'étanchéité (15) solidaire de l'armature, ledit joint d'étanchéité étant réalisé en un matériau élastique et étant en contact avec une surface de coulissement (16) de l'autre élément parmi l'élément fixe et l'élément rotatif, et
- une bague annulaire (17) comprenant une portion de cylindre (17a) montée solidaire de l'autre élément parmi l'élément fixe et l'élément rotatif, et une portion de collerette (17b) qui s'étend radialement par rapport à l'axe de rotation (X) depuis une extrémité de ladite portion de cylindre, ladite surface de coulissement (16) étant formée sur la portion de cylindre et la portion de collerette de la bague annulaire (17), et

dans lequel :

- le joint d'étanchéité (15) comprend une première lèvre (15b) qui s'étend radialement depuis l'armature annulaire (14) jusqu'à la portion de cylindre (17a) pour être en contact avec la surface de coulissement appartenant à ladite portion de cylindre, et une seconde lèvre (15c) qui s'étend axialement depuis l'armature annulaire (14) jusqu'à la portion de collerette (17b) pour être en contact avec une surface de coulissement appartenant à ladite portion de collerette,
- ladite bague annulaire (17) et lesdites première et deuxième lèvres (15a, 15b) d'étanchéité définissant un volume interne,

b) on effectue traitement de la surface de coulissement par au moins les sous-étapes suivantes :

- une sous-étape de grenaillage pour former des creux sur la surface de coulissement, puis
- une sous-étape de polissage pour éliminer au moins partiellement des pics sur la surface de coulissement.

**8.** Procédé selon la revendication 7, dans lequel la sous étape de grenaillage consiste à impacter la surface de coulissement avec des billes de verre d'un diamètre compris entre 50 $\mu$m et 423 $\mu$m pendant une durée comprise entre 5 minutes et 15 minutes.

**9.** Procédé selon la revendication 7 ou la revendication 8, dans lequel la sous-étape de polissage consiste à faire vibrer la surface de coulissement en présence de formes de finition.

**10.** Procédé selon la revendication 7, dans lequel la sous-étape de polissage est effectuée pendant une durée comprise entre 15 minutes et 45 minutes.

**11.** Procédé selon l'une quelconque des revendications 7 à 10, dans lequel l'ensemble de joint d'étanchéité comprend en outre une bague annulaire et destinée à être solidaire de l'autre élément, et ladite surface de coulissement est formée sur ladite bague annulaire.

**Patentansprüche**

**1. Dichtungsanordnung** (10), umfassend :

- ein festes Element (11),
- ein Drehelement (12), das dazu bestimmt ist, in Bezug auf das feste Element um eine Drehachse (X) drehbeweglich zu sein, und
- ein Dichtungsorgan (13), umfassend eine starre ringförmige Armatur (14), die fest an einem Element aus festem Element und Drehelement, angebracht ist, und eine Dichtung (15), die fest mit der Armatur (14) verbunden ist, wobei die Dichtung (15) aus einem elastischen Material gefertigt ist und mit einer Gleitfläche (16) des anderen Elements aus festem Element und Drehelement in Kontakt steht, und
- einen ringförmigen Ring (17), umfassend einen Zylinderabschnitt (17a), der fest an dem anderen Element aus festem Element und Drehelement angebracht ist, und einen Flanschabschnitt (17b), der sich von einem Ende des Zylinderabschnitts radial zur Drehachse (X) erstreckt, wobei die Gleitfläche (16) auf dem Zylinderabschnitt und dem Flanschabschnitt des ringförmigen Rings (17) ausgebildet ist, und wobei:

- die Dichtung (15) eine erste Lippe (15b) umfasst, die sich radial von der ringförmigen Armatur (14) zum Zylinderabschnitt (17a) erstreckt, um mit der zum Zylinderabschnitt gehörenden Gleitfläche in Kontakt zu stehen, und eine zweite Lippe (15c) umfasst, die sich axial von der ringförmigen Armatur (14) zum Flanschabschnitt (17b) erstreckt, um mit einer zum Flanschabschnitt gehörenden Gleitfläche in Kontakt zu stehen,
- wobei der ringförmige Ring (17) und die erste und zweite Dichtungslippe (15a, 15b) ein Innenvolumen begrenzen,

wobei die Dichtungsanordnung (10) **dadurch gekennzeichnet ist, dass**

- die Gleitfläche (16) einen mittleren arithmetischen Rauheitswert (Ra) größer gleich 0,15 $\mu$m und kleiner 0,5 $\mu$m aufweist, und
- die Gleitfläche (16) ein Rauheitsverhältnis (R) aufweist, das größer gleich 1,5 ist, wobei das Rauheitsverhältnis (R) das Verhältnis eines ersten Parameters, der einer Menge von Vertiefungen eines Profils auf der Gleitfläche entspricht, zu einem zweiten Parameter ist, der einer Menge von Spitzen des Profils auf der Gleitfläche entspricht, und wobei der erste Parameter der Parameter Rvk und der zweite Parameter der Parameter Rpk ist, wobei die Parameter Rvk und Rpk gemäß der Norm ISO 13565 definiert und bestimmt sind.

2. Anordnung nach Anspruch 1, wobei das Rauheitsverhältnis (R) größer gleich 2 ist.

3. Anordnung nach Anspruch 1, wobei der mittlere arithmetische Rauheitswert (Ra) größer gleich 0,2 $\mu$m und kleiner als 0,3 $\mu$m ist.

4. Anordnung nach Anspruch 1, wobei das Innenvolumen wenigstens teilweise mit einem Fett gefüllt ist.

5. Anordnung nach Anspruch 4, wobei das Fett eine kinematische Viskosität bei 40°C zwischen 5 Centistokes und 40 Centistokes aufweist.

6. **Wälzlager** (1), umfassend eine Dichtungsanordnung (10) nach einem der Ansprüche 1 bis 5 und umfassend Rollkörper (4), die in einem Lagerraum angeordnet sind, um eine relative Drehung des Drehlements in Bezug auf das feste Element um die Drehachse zu ermöglichen.

7. **Verfahren zur Herstellung einer Dichtungsanordnung,** umfassend die folgenden Schritte:

a) Bereitstellen einer Dichtungsanordnung (10), umfassend:

- ein festes Element (11);
- ein Drehelement (12), das dazu bestimmt ist, in Bezug auf das feste Element um eine Drehachse (X) drehbar zu sein,
- ein Dichtungsorgan (13), umfassend eine starre ringförmige Armatur (14), die fest auf einem Element aus festem Element und Drehelement angebracht ist, und eine Dichtung (15), die fest mit der Armatur verbunden ist, wobei die Dichtung aus einem elastischen Material gefertigt ist und mit einer Gleitfläche (16) des anderen Elements aus festem Element und Drehelement in Kontakt steht, und
- einen ringförmigen Ring (17), umfassend einen Zylinderabschnitt (17a), der fest an dem anderen Element aus festem Element und Drehelement angebracht ist, und einen Flanschabschnitt (17b), der sich von einem Ende des Zylinderabschnitts radial zur Drehachse (X) erstreckt, wobei die Gleitfläche (16) auf dem Zylinderabschnitt und dem Flanschabschnitt des Ringes (17) ausgebildet ist, und wobei:

- die Dichtung (15) eine erste Lippe (15b) umfasst, die sich radial von der ringförmigen Armatur (14) zum Zylinderabschnitt (17a) erstreckt, um mit der zum Zylinderabschnitt gehörenden Gleitfläche in Kontakt zu stehen, und eine zweite Lippe (15c) umfasst, die sich axial von der ringförmigen Armatur (14) zum Flanschabschnitt (17b) erstreckt, um mit einer zum Flanschabschnitt gehörenden Gleitfläche in Kontakt zu stehen,
- wobei der ringförmige Ring (17) und die erste und zweite Dichtungslippe (15a, 15b) ein Innenvolumen begrenzen,

b) wobei die Gleitfläche mittels wenigstens eines der folgenden Unterschritte bearbeitet wird:

- einem Unterschritt des Kugelstrahlens, um Vertiefungen auf der Gleitfläche zu bilden, und dann
- einem Unterschritt des Polierens, um wenigstens teilweise Spitzen auf der Gleitfläche zu entfernen.

8. Verfahren nach Anspruch 7, wobei der Unterschritt des Kugelstrahlens darin besteht, die Gleitfläche mit Glaskugeln mit einem Durchmesser zwischen 50 $\mu$m und 423 $\mu$m für eine Dauer zwischen 5 Minuten und 15 Minuten zu beaufschlagen.

9. Verfahren nach Anspruch 7 oder Anspruch 8, wobei der Unterschritt des Polierens darin besteht, die Gleitfläche in Gegenwart von Endbearbeitungsformen vibrieren zu lassen.

10. Verfahren nach Anspruch 7, wobei der Unterschritt des Polierens für eine Zeitdauer zwischen 15 Minuten und 45 Minuten durchgeführt wird.

11. Verfahren nach einem der Ansprüche 7 bis 10, wobei die Dichtungsanordnung ferner einen ringförmigen Ring umfasst und dazu bestimmt ist, mit dem anderen Element fest verbunden zu sein, und wobei die Gleitfläche auf dem Ring geformt ist.

**Claims**

1. A **seal assembly** (10) comprising:

   - a fixed element (11);
   - a rotating element (12) intended to be rotatable relative to the fixed element around an axis of rotation (X); and
   - a seal member (13) comprising a stiff annular reinforcement (14) mounted securely on one element among the fixed element and the rotating element, and a seal (15) secured to the reinforcement (14), where said seal (15) is made of an elastic material and is in contact with a sliding surface (16) of the other element among the fixed element and the rotating element, and
   - an annular ring (17) comprising a cylindrical portion (17a) mounted secured to the other element among the fixed element and the rotating element, and a flange portion (17b) which extends radially relative to the axis of rotation (X) from one end of said cylindrical portion, said sliding surface (16) being formed on said annular ring (17);
   - the seal (15) comprises a first lip (15b) which extends radially from the annular reinforcement (14) out to the cylindrical portion (17a) in order to be in contact with the sliding surface belonging to said cylindrical portion, and a second lip (15c) which extends axially from the annular reinforcement (14) to the flange portion (17b) in order to be in contact with a sliding surface belonging to said flange portion;
   - said annular ring (17) and said first and second seal lips (15a, 15b) define an internal volume,

   the seal assembly (10) being **characterized in that**

   - The sliding surface (16) has an arithmetic mean roughness (Ra) greater than or equal to 0.15 $\mu$m

and less than 0.5 $\mu$m; and
   - the sliding surface (16) has a roughness ratio (R) greater than or equal to 1.5, where said roughness ratio (R) is the ratio of a first parameter corresponding to a quantity of valleys of a profile over the sliding surface to a second parameter corresponding to a quantity of peaks of said profile over the sliding surface, and wherein the first parameter is the Rvk parameter and the second parameter is the Rpk parameter, where said Rvk and Rpk parameters are defined and determined according to the standard ISO 13565.

2. The assembly according to claim 1, wherein the roughness ratio (R) is greater than or equal to 2.

3. The assembly according to claim 1, wherein the arithmetic mean roughness (Ra) is greater than or equal to 0.2 $\mu$m and less than 0.3 $\mu$m.

4. The assembly according to claim 1, wherein the inner volume is at least partially filled with grease.

5. The assembly according to claim 4, wherein the grease has a kinematic viscosity at 40°C included between 5 centiStokes and 40 centiStokes.

6. **A roller bearing (1)** comprising a seal assembly (10) according to any one of claims 1 to 5, and rolling bodies (4) arranged in a rolling space to allow relative rotation of the rotating element relative to the fixed element around the axis of rotation.

7. **A method for manufacturing** a seal assembly comprising the following steps:

   a) providing a seal assembly (10) comprising:

      - a fixed element (11);
      - a rotating element (12) intended to be rotatable relative to the fixed element around an axis of rotation (X) ;
      - a seal member (13) comprising a stiff annular reinforcement (14) mounted securely on one element among the fixed element and the rotating element, and a seal (15) secured to the reinforcement, where said seal is made of an elastic material and is in contact with a sliding surface (16) of the other element among the fixed element and the rotating element; and

   wherein

      - an annular ring (17) comprising a cylindrical portion (17a) mounted secured to the other element among the fixed element and the rotating element, and a flange portion (17b) which extends radially relative to the axis of rotation (X) from one end of said cylindrical portion, said sliding surface (16) being formed on said annular ring (17);
- the seal (15) comprises a first lip (15b) which extends radially from the annular reinforcement (14) out to the cylindrical portion (17a) in order to be in contact with the sliding surface belonging to said cylindrical portion, and a second lip (15c) which extends axially from the annular reinforcement (14) to the flange portion (17b) in order to be in contact with a sliding surface belonging to said flange portion;
- said annular ring (17) and said first and second seal lips (15a, 15b) define an internal volume,

b) the sliding surface is treated by at least one of the following substeps:

- a shot blasting substep for forming valleys on the sliding surface; and
- a polishing substep for at least partially eliminating the peaks on the sliding surface.

8. The method according to claim 7, wherein the shot blasting substep consists of impacting the sliding surface with glass beads with a diameter included between 50 μm and 423 μm for a time included between 5 minutes and 15 minutes.

9. The method according to claim 7 or claim 8, wherein the polishing substep consists of vibrating the sliding surface in the presence of finishing media.

10. The method according to claim 7, wherein the polishing substep is done for a time included between 15 minutes and 45 minutes.

11. The method according to any one of claims 7 to 10, wherein the seal assembly further comprises a ring that is annular and intended to be secured to the other element, and said sliding surface is formed on said annular ring.

**FIG. 1**

**FIG. 2**

**FIG. 3**

**FIG. 4**

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1830086 A
- US 2007297901 A
- US 2003207657 A
- WO 2012161259 A